# EUROPÄISCHE PATENTSCHRIFT

(11) **EP 2 096 329 B1**
(45) Veröffentlichungstag und Bekanntmachung des Hinweises auf die Patenterteilung: **13.04.2011**
(21) Anmeldenummer: 08003690.8
(22) Anmeldetag: 28.02.2008
(51) Int. Cl.: F16D 23/06

(54) **Synchonisiereinrichtung für Schaltgetriebe**
Synchronizing device for transmission
Dispositif de synchronisation pour transmission

(43) Veröffentlichungstag der Anmeldung: 02.09.2009
(73) Patentinhaber: HOERBIGER Synchron Technik GmbH & Co. KG, 71720 Oberstenfeld (DE)
(72) Erfinder: Lollino, Marcello, 74172 Neckarsulm (DE)
(74) Vertreter: Kitzhofer, Thomas

(56) Entgegenhaltungen:
- WO-A-2004/005739
- JP-A- 59 208 227

## Beschreibung

Die Erfindung betrifft eine Synchronisiereinrichtung für ein Schaltgetriebe gemäß dem Oberbegriff des Anspruches 1.

Bei bisher bekannten Synchronisiereinrichtungen wird über eine Schalt- bzw. Schiebemuffe ein Synchronring auf einen Reibkonus eines Kupplungskörpers geschoben, der mit einem Losrad des Getriebes verdrehfest verbunden ist. Ist eine Drehzahlangleichung durch diesen Synchronisiervorgang erreicht, kann der Gang geschaltet werden.

Der bauliche Aufwand und die Festigkeit derartiger bekannter Synchronisiereinrichtungen ist jedoch aufgrund der Teilegeometrie relativ hoch bzw. relativ gering.

JP 59 208 227 zeigt eine Synchronisiereinrichtung gemäß dem Oberbegriff von Anspruch 1.

Es ist daher Aufgabe der vorliegenden Erfindung, eine Synchronisiereinrichtung für Schaltgetriebe zu schaffen, die in ihrem Aufbau vereinfacht und in ihrer Festigkeit erhöht ist, wobei ferner eine Schaltkomfortverbesserung erreichbar sein soll.

Die Lösung dieser Aufgabe erfolgt durch die Merkmale des Anspruchs 1.

Die erfindungsgemäße Synchronisiereinrichtung ergibt die Vorteile einer Einbaumaßreduzierung, einer Gewichtsreduzierung und einer Schaltwegreduzierung. Ferner ergeben sich die Vorteile einer Fertigungsvereinfachung und einer Schaltkräftereduzierung durch die Reduzierung der Schaltübersetzung.

Die Unteransprüche 2-7 haben vorteilhafte Weiterbildungen der Erfindung zum Inhalt.

In den Ansprüchen 8 und 9 ist eine erfindungsgemäße Synchronisierzange als selbstständig handelbares Objekt definiert.

Weitere Einzelheiten, Vorteile und Merkmale der vorliegenden Erfindung ergeben sich aus nachfolgender Beschreibung von Ausführungsbeispielen anhand der beigefügten Zeichnung. Es zeigt:
- Fig. 1-5: schematisch stark vereinfachte Darstellungen unterschiedlicher Schaltstellungen der erfindungsgemäßen Synchronisiereinrichtung,
- Fig. 6-9: schematisch vereinfachte Darstellungen von Bauteilen einer Synchronisierzange der erfindungsgemäßen Synchronisiereinrichtung,
- Fig. 10: eine perspektivische Darstellung einer Führungsmuffe,
- Fig. 11: eine schematisch leicht vereinfachte Darstellung von Bauteilen einer Synchronisierzange in Zusammenwirkung mit der Führungsmuffe,
- Fig. 12: eine vereinfachte Darstellung eines Synchronrings,
- Fig. 13: eine schematisch vereinfachte Darstellung von Bauteilen der Synchronisierzange in Zusammenwirkung mit der Führungsmuffe und zwei Synchronringen,
- Fig. 14: eine vereinfachte Darstellung einer Schaltmuffe und ihrer Rastiernut,
- Fig. 15: eine Ausführungsvariante einer Schaltmuffe in Zusammenwirkung mit einem Anschlag,
- Fig. 16: eine schematisch vereinfachte Darstellung von Bauteilen der Synchronisierzange in Zusammenwirkung mit der Schaltmuffe,
- Fig. 17: eine schematisch vereinfachte Darstellung von Bauteilen der Synchronisierzange in Zusammenwirkung mit der Führungsmuffe und der Schaltmuffe,
- Fig. 18-19: schematisch vereinfachte Darstellungen von Bauteilen der Synchronisierzange in Zusammenwirkung mit der Führungsmuffe, der Schaltmuffe und dem Synchronring.

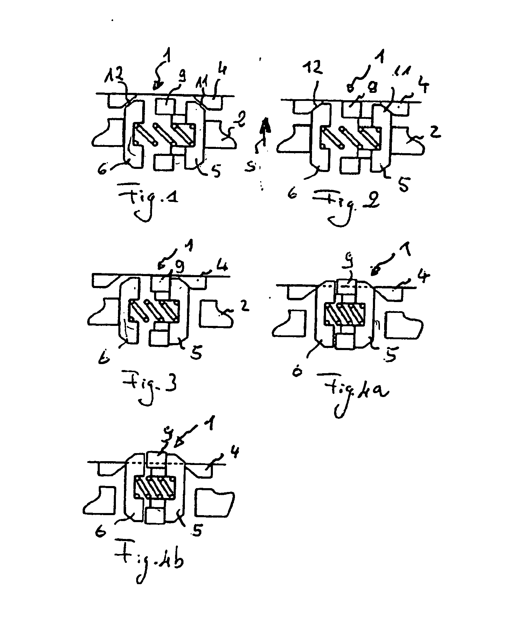

In den Fig. 1-5 sind die wesentlichen Teile der erfindungsgemäßen Synchronisiereinrichtung 1 für ein in diesen Figuren nicht näher dargestelltes Schaltgetriebe erläutert.

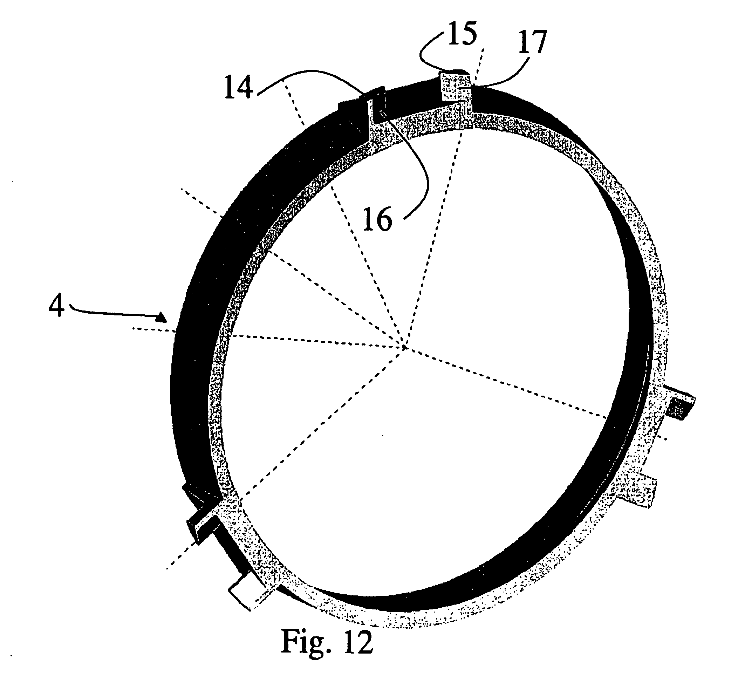

In Fig. 1, die die Neutralstellung der Synchronisiereinrichtung 1 darstellt, sind in Draufsicht eine an der nicht dargestellten Schaltmuffe geführte Führungseinrichtung bzw. Anschlag 9 und eine Synchronisierzange 5 bzw. Führungseinrichtung sichtbar. Die Synchronisierzange 5 weist zwei durch ein Federelement 8, voneinander in der Neutralstellung getrennte Schienen 6 und 7 auf, zwischen denen, vorzugsweise mittig, der Anschlag 9 angeordnet ist. Die Schienen 6 und 7 weisen jeweils abgeschrägte Sperrflächen 12 und 11 auf, die mit Gegenflächen des Synchronrings 4 zusammenwirken können, wobei sich die Gegenflächen insbesondere aus der Darstellung der Fig. 12 ergeben.

Der Anschlag 9 ist ein Teil, das mit der Schaltmuffe verbunden wird. Die Schienen 6, 7, zusammen mit dem sie trennenden Federelement 8 und der Anschlag 9, können mit der Schaltmuffe verbunden und derart geführt werden, dass die Schienen 6, 7, die die für die Durchführung des Synchronisiervorgangs erforderlichen Bewegungen ausführen können, die nachfolgend anhand der Fig. 2-5 näher erläutert werden.

Fig. 2 stellt den Zustand der Vorsynchronisation dar, in dem die Schaltmuffe / Anschlag 9 in Richtung des Pfeils S auf den Synchronring 4 vorgeschoben worden ist, so dass die Sperrflächen 11 und 12 der Schienen 6 und 7 mit den komplementären Sperrflächen des Synchronrings 4 in Anlage geraten.

Im darauffolgenden Schritt der Synchronisation, der in Fig. 3 dargestellt ist, entsteht aufgrund eines Reibmoments eine Kraft, die die Schienen 6 und 7 aufeinander zu bewegt, wobei sich bei der in Fig. 3 dargestellten Stellung die Schiene 7 an den Anschlag 9 anlegt.

Zum Durchschalten bzw. Durchgehen werden die Schienen 6, 7 weiter aufgrund der entstehenden Kräfte aufeinander zugedrückt, was sich aus Fig. 4 ergibt, so dass in diesem Zustand, der ein Schalten des Ganges ermöglicht, die Schienen 6, 7 beide am Anschlag 9 anliegen, wodurch das Federelement 8 entsprechend zusammengedrückt wird, und somit zwischen den beiden Zähnen des Synchronrings 4 hindurchtreten können.

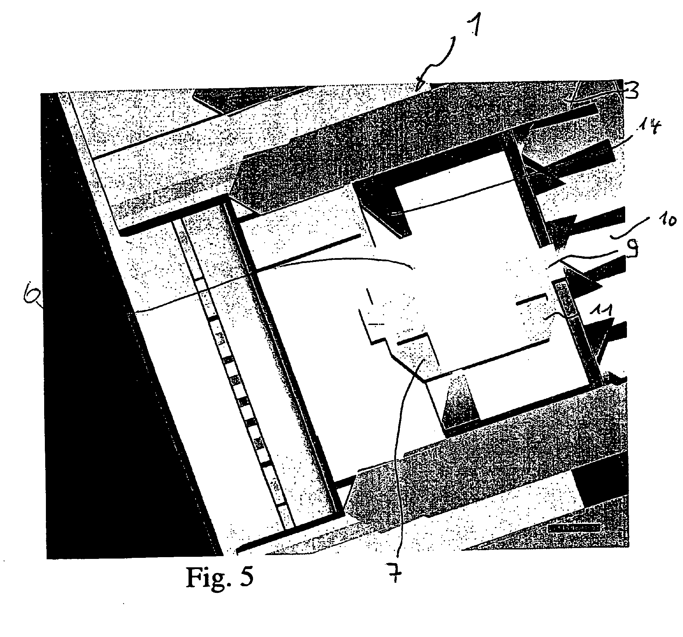

Fig. 5 stellt den eingelegten Zustand dar, wobei der Schaltweg von dem Anschlag 9 und dem Kupplungskörper 10 begrenzt wird.

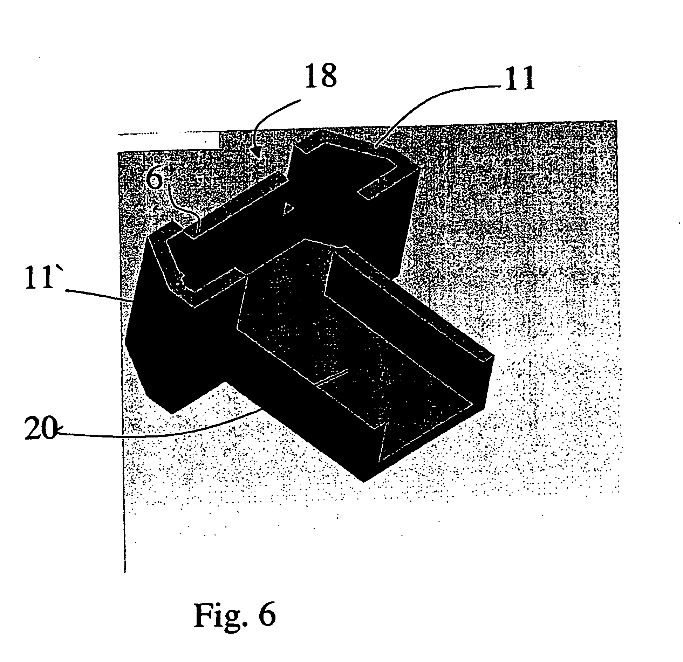

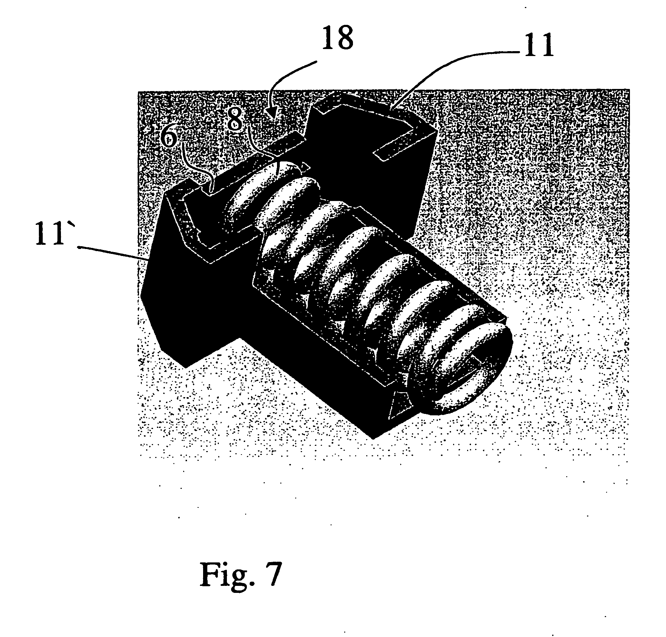

In den Fig. 6-9 sind die beiden Schienen 6 und 7 der Synchronisierzange 5 im Einzelnen dargestellt. Aus der Zusammenschau dieser Figuren ergibt sich, dass die Schienen 6 und 7 einen U-ähnlichen blockartigen Körper 18 bzw. 19 aufweisen, an dem jeweils eine Bodenplatte 20 bzw. Deckenplatte 21 im Fall der Schiene 7 angeordnet sind.

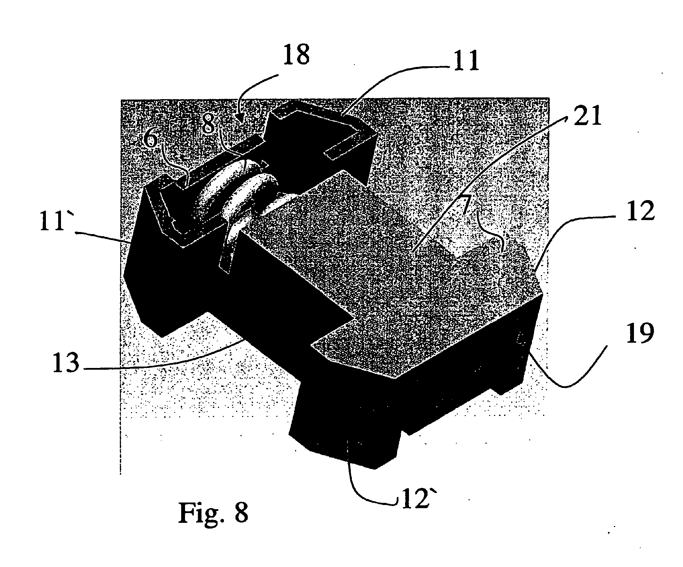

Hieraus ergibt sich in dem in der Fig. 8 gezeigten zusammengeführten Zustand der Schienen 6 und 7 ein Aufnahmeraum 13 für das Federelement 8, so dass sich ein insgesamt sehr kompakter Aufbau dieser Teile der Synchronisierzange 5 ergibt.

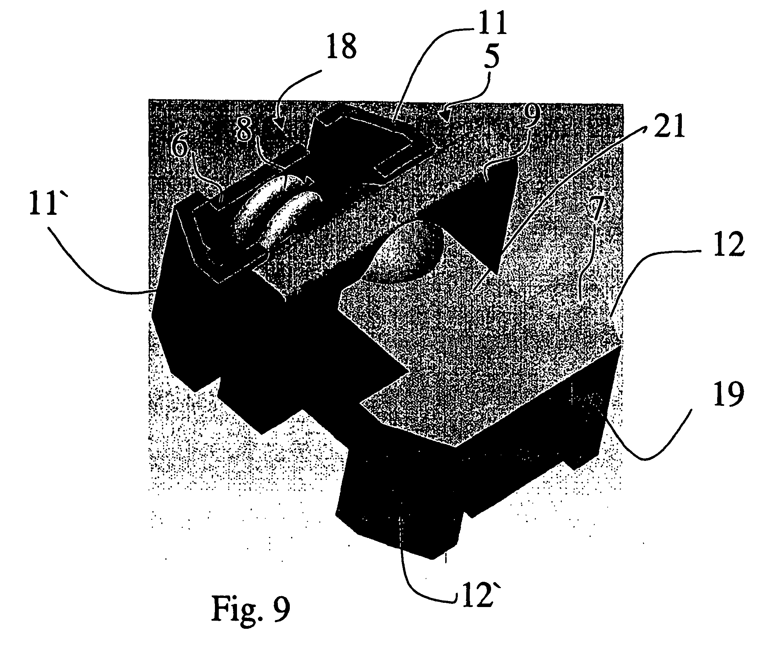

Fig. 9 verdeutlicht den Zusammenbau der Synchronisierzange 5 und des Anschlags 9.

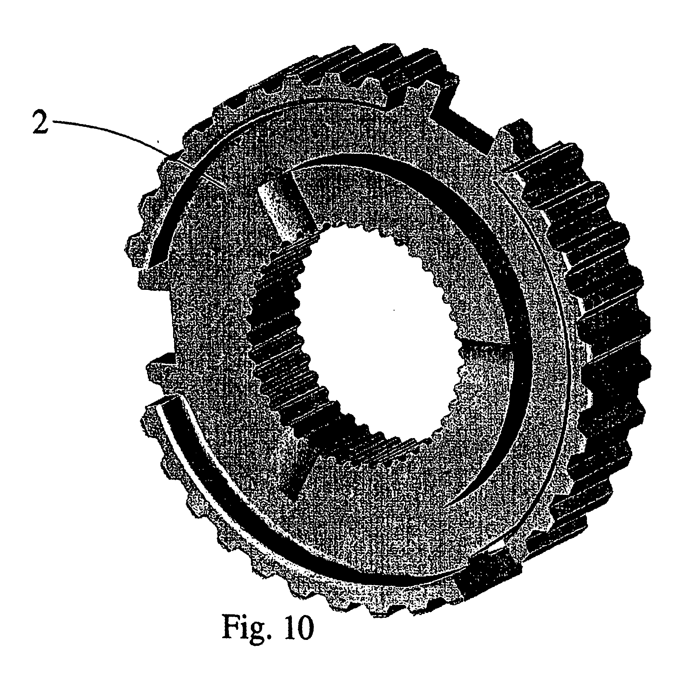

Fig. 10 verdeutlicht die Führungsmuffe 2.

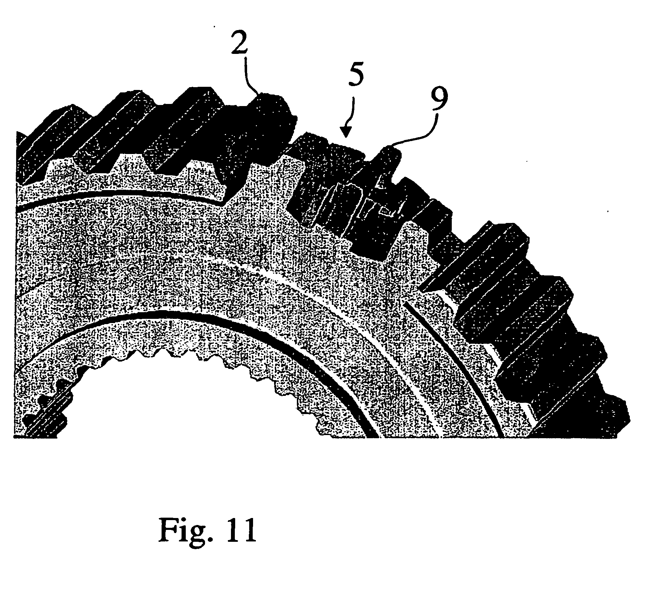

Fig. 11 verdeutlicht den Zusammenbau der Synchronisierzange 5, des Anschlags 9 und der Führungsmuffe 2.
Fig. 12 verdeutlicht einen Synchronring 4 mit den Zähnen 14 und 15, an denen die komplementär zu den Sperrflächen 11 und 12 ausgebildeten Gegenflächen 16 und 17 angeordnet sind.

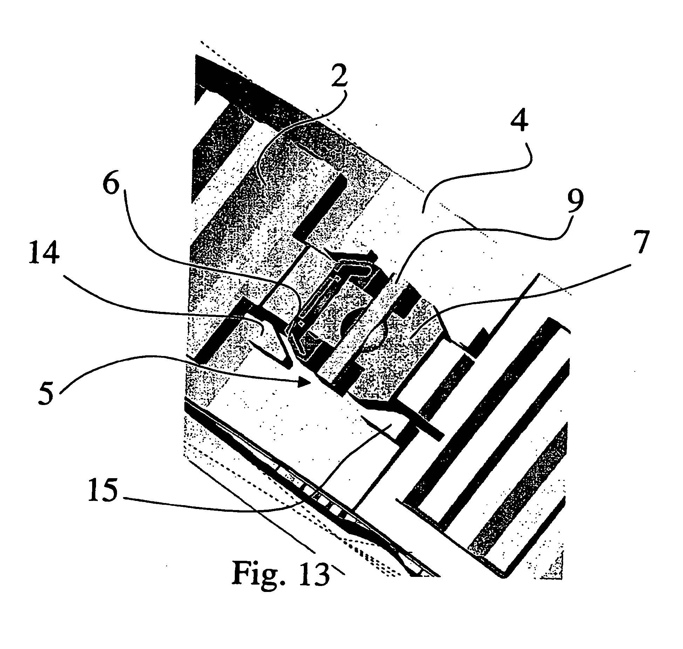

Fig. 13 verdeutlicht das Zusammenwirken der Synchronisierzange 5 bzw. deren Schienen 6 und 7 mit den Zähnen 14 und 15 des Synchronrings 4, was zuvor bereits anhand der Fig. 1-5 im Einzelnen erläutert worden ist. Da in den Fig. 13 jeweils die Schaltmuffe weggelassen ist, ist in diesen Figuren der Anschlag 9 nicht zu sehen.

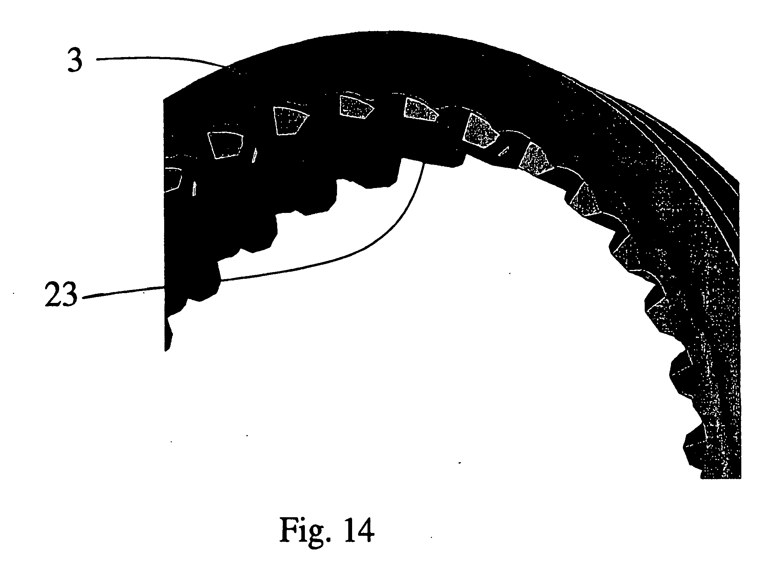

Die Fig. 14 zeigt die Schaltmuffe 3 mit Rastiernut 23 für die Verkoppelung mit dem Anschlag 9, der nicht dargestellt ist.

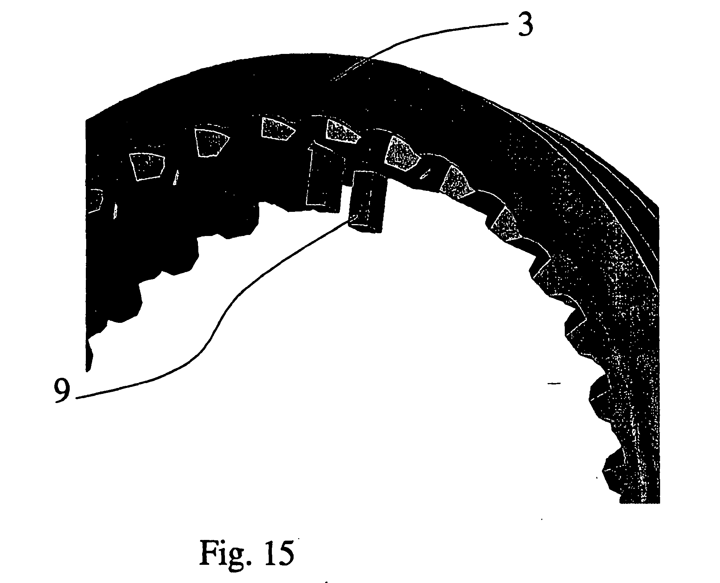

Die Fig. 15 zeigt die Schaltmuffe 3 mit dem Anschlägen 9, der drei Funktionen erzeugt: a) Führen der Synchronzange in Schaltrichtung während der Schaltung; b) Anschlag für die Schiene während der Synchronisation, wie in Fig. 3 und 4 dargestellt; c) Schaltwegbegrenzung durch den Anschlag auf dem Kupplungskörper 10.

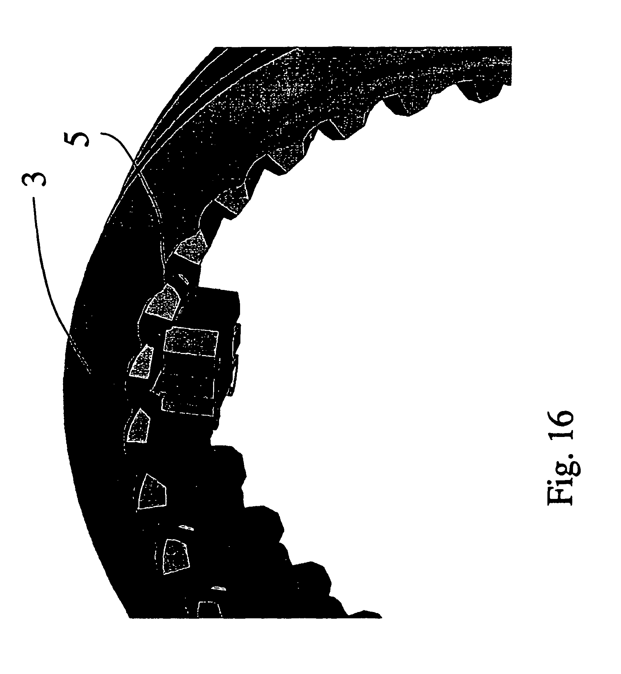

Die Fig. 16 zeigt den Zusammenbau der Synchronzange 5, des Anschlags 9 und der Schaltmuffe 3.

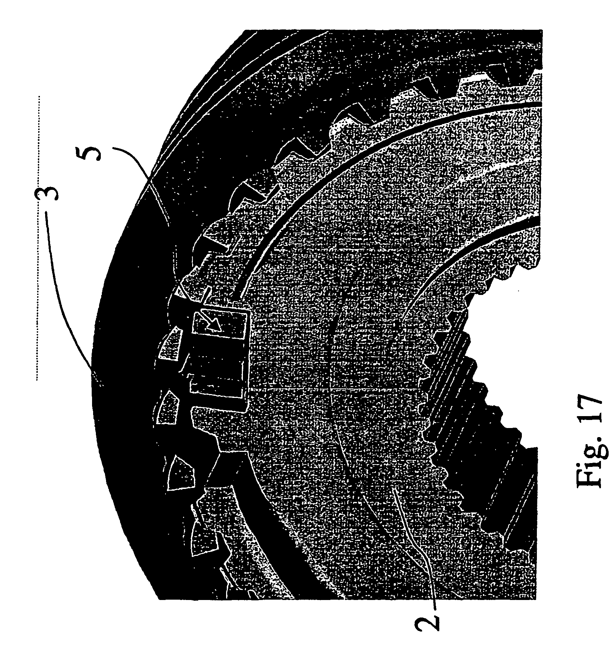

Die Fig. 17 zeigt den Zusammenbau der Synchronzange (5), des Anschlags 9, der Schaltmuffe 3 und der Führungsmuffe 2.

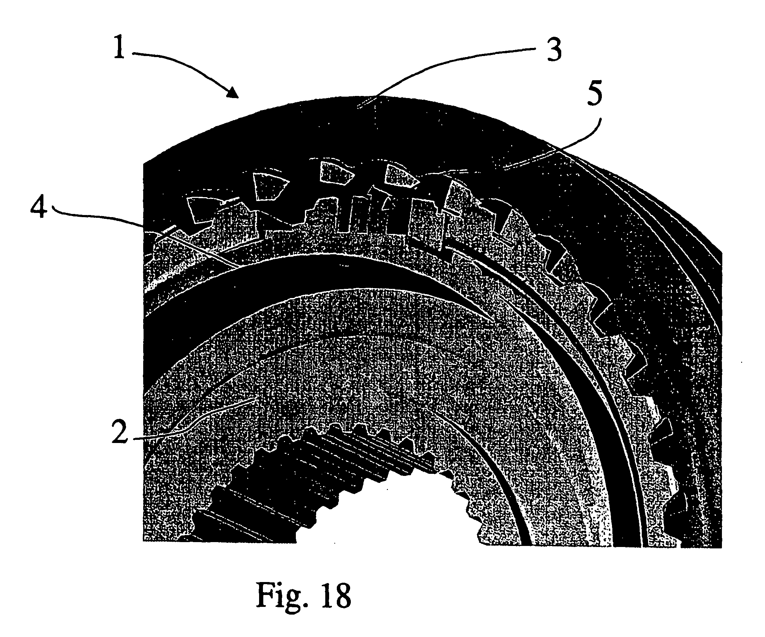

Fig. 18 verdeutlicht in einer Anordnung die Synchronzange 5 an der Schaltmuffe 3, die auf einer Führungsmuffe bzw. einer Synchronnabe 2 geführt ist, die wiederum auf der in Fig. 5 nicht näher dargestellten Getriebewelle verdrehfest angeordnet ist.

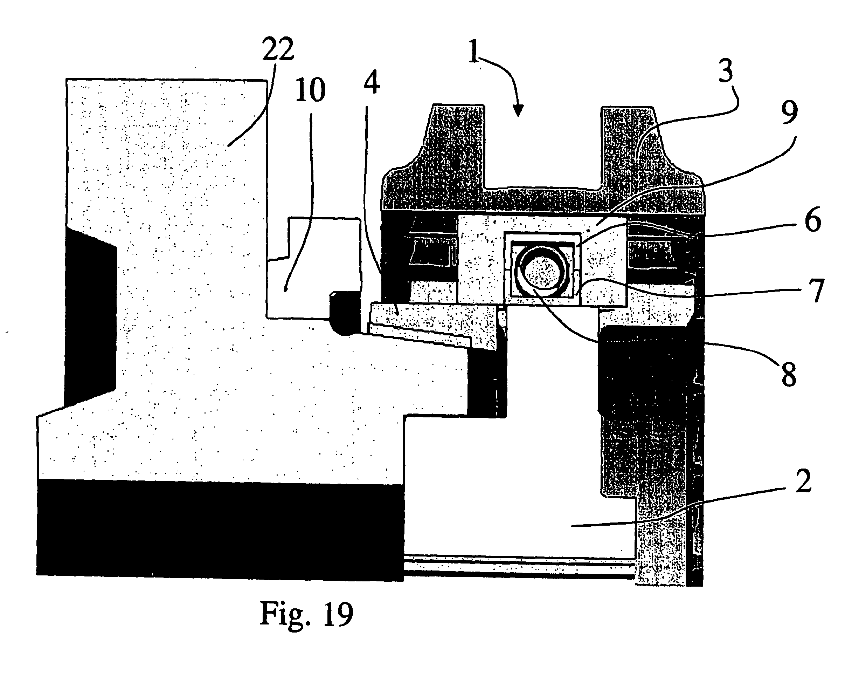

Fig. 19 verdeutlicht in einer vereinfachten Seitenansicht die Anordnung wie in Fig. 18 mit der Darstellung des Losrades 22.

Neben der voranstehenden schriftlichen Offenbarung der Erfindung wird hiermit explizit auf deren zeichnerische Darstellung in den Fig. 1-19 Bezug genommen.

### Bezugszeichenliste

- 1: Synchronisiereinrichtung
- 2: Führungsmuffe
- 3: Schaltmuffe
- 4: Synchronring
- 5: Synchronisierzange
- 6, 7: Schienen
- 8: Federelement
- 9,: Anschlag
- 10: Kupplungskörper
- 11, 11', 12, 12': Sperrflächen
- 13: Aufnahmeraum
- 14, 15: Zähne des Synchronrings
- 16, 17: Gegenflächen der Zähne 14 und 15
- 18, 19: Körper
- 20, 21: Bodenplatte/Deckenplatte
- 22: Losrad/Schaltrad
- 23: Rastiernut
- S: Schaltrichtung/Schaltkraft

## Patentansprüche

1. Synchronisiereinrichtung (1) für ein Schaltgetriebe
- mit einer Führungsmuffe (2), die auf einer Getriebewelle anordnenbar ist,
- mit einer auf der Führungsmuffe (2) geführten Schalmuffe (3), und
- mit zumindest einem Synchronring (4), wobei
- die Schaltmuffe (3) mit einer Synchronisierzange (5) versehen ist, die zwei quer zu einer Schaltrichtung (S) beweglich geführte Schienen (6, 7) aufweist, die mittels eines Federelements (8) auseinandergedrückt gehalten sind **dadurch gekennzeichnet, dass** zwischen den Schienen (6,7) ein Anschlag (9) angeordnet ist.

2. Synchronisiereinrichtung nach Anspruch 1, **dadurch gekennzeichnet, dass** die Schienen (6, 7) abgeschrägte Sperrflächen (11, 11', 12, 12') aufweisen.

3. Synchronisiereinrichtung nach einem der Ansprüche 1 und 2, **dadurch gekennzeichnet, dass** die Schienen (6, 7) einen Aufnahmeraum (13) für das Federelement (8) begrenzen.

4. Synchronisiereinrichtung nach Anspruch 1, **dadurch gekennzeichnet, dass** der Anschlag (9) und der Kupplungskörper (10) den Schaltweg begrenzen.

5. Synchronisiereinrichtung nach Anspruch 2 oder 3, **dadurch gekennzeichnet, dass** der Synchronring (4) komplementär ausgebildete Gegenflächen (16, 17) zum Zusammenwirken mit den Sperrflächen (11, 11', 12, 12') der Schienen (6 bzw. 7) aufweist.

6. Synchronisiereinrichtung nach einem der Ansprüche 1 bis 4, **dadurch gekennzeichnet, dass** der Anschlag (9) als separates Element ausgebildet ist, das mit der Schaltmuffe (3) verbindbar ist.

7. Synchronisiereinrichtung nach einem der Ansprüche 1 bis 6, **dadurch gekennzeichnet, dass** das Federelement (8) als Schraubendruckfeder ausgebildet ist.

8. Synchronisierzange (5) für eine für ein Schaltgetriebe vorgesehene Synchronisiereinrichtung (1), die eine Schaltmuffe (3) aufweist, **gekennzeichnet**
- **durch** zwei quer zu einer Schaftrichtung (S) der Schaltmuffe (3) beweglich an dieser führbare Schienen (6, 7), zwischen denen ein die Schienen (6, 7) im eingebautem Zustand in eine Neutralstellung vorspannendes Federelement (8) vorgesehen ist, und
wobei in eingebautem Zustand die Schienen (6,7) beide an einem zwischen den Schienen (6,7), und an der Schaltmuffe (3) angeordnete Anschlag (9) anliegen können.

9. Synchronisierzange nach Anspruch 8, **gekennzeichnet durch** wenigstens eines der Merkmale der Synchronisierzange der Ansprüche 2, 3, 5, 6 und/oder 7.

## Claims

1. A synchronizing device (1) for a manual gearbox, comprising
- a guide sleeve (2) adapted to be arranged on a gear shaft,
- a shift collar (3) guided on the guide sleeve (2), and
- at least one synchronizer ring (4),
- the shift collar (3) being provided with a synchronizing tongs (5) which includes two rails (6, 7) which are movably guided transversely to a shifting direction (S) and are held pushed apart by means of a spring member (8), **characterized in that** a stop (9) is arranged between the rails (6, 7).

2. The synchronizing device according to claim 1, **characterized in that** the rails (6, 7) have chamfered blocking surfaces (11, 11', 12, 12').

3. The synchronizing device according to either of claims 1 and 2, **characterized in that** the rails (6, 7) define a receiving space (13) for the spring member (8).

4. The synchronizing device according to claim 1, **characterized in that** the stop (9) and the clutch body (10) limit the shifting travel.

5. The synchronizing device according to claim 2 or 3, **characterized in that** the synchronizer ring (4) includes complementarily configured counter-surfaces (16, 17) for cooperating with the blocking surfaces (11, 11', 12, 12') of the rails (6 and 7, respectively).

6. The synchronizing device according to any of claims 1 to 4, **characterized in that** the stop (9) is configured as a separate member which is adapted to be connected to the shift collar (3).

7. The synchronizing device according to any of claims 1 to 6, **characterized in that** the spring member (8) is configured as a helical compression spring.

8. A synchronizing tongs (5) for a synchronizing device (1) that is provided for a manual gearbox and includes a shift collar (3), **characterized**
- **by** two rails (6, 7) which are movably guidable on the shift collar (3) transversely to a shifting direction (S) thereof and between which a spring member (8) is provided which pretensions the rails (6, 7) into a neutral position in the installed condition, and
- both rails (6, 7), in the installed condition, being adapted to rest against a stop (9) arranged between the rails (6, 7) and on the shift collar (3).

9. The synchronizing tongs according to claim 8, **characterized by** at least one of the features of the synchronizing tongs of claims 2, 3, 5, 6 and/or 7.

## Revendications

1. Dispositif de synchronisation (1) pour boîte de vitesses, comportant
- un manchon de guidage (2) qui peut être agencé sur un arbre de boîte de vitesses,
- un manchon de changement de vitesse (3) guidé sur le manchon de guidage (2) et
- au moins une bague de synchronisation (4),
- le manchon de changement de vitesse (3) étant pourvu d'une pince de synchronisation (5) qui présente deux rails (6, 7) guidés de manière mobile transversalement à une direction de changement de vitesse (S), qui sont maintenues en écartement au moyen d'un élément ressort (8),
**caractérisé en ce qu'**une butée (9) est agencée entre les rails (6, 7).

2. Dispositif de synchronisation selon la revendication 1, **caractérisé en ce que** les rails (6, 7) présentent des surfaces de blocage (11, 11', 12, 12') chanfreinées.

3. Dispositif de synchronisation selon l'une des revendications 1 et 2, **caractérisé en ce que** les rails (6, 7) délimitent un espace de réception (13) pour l'élément ressort (8).

4. Dispositif de synchronisation selon la revendication 1, **caractérisé en ce que** la butée (9) et le corps d'embrayage (10) limitent la course de changement de vitesse.

5. Dispositif de synchronisation selon la revendication 2 ou 3, **caractérisé en ce que** la bague de synchronisation (4) présente des surfaces antagonistes (16, 17) réalisées complémentaires pour coopérer avec les surfaces de blocage (11, 11', 12, 12') des rails respectifs (6 ou 7).

6. Dispositif de synchronisation selon l'une des revendications 1 à 4, **caractérisé en ce que** la butée (9) est réalisée sous forme d'élément séparé qui peut être relié au manchon de changement de vitesse (3).

7. Dispositif de synchronisation selon l'une des revendications 1 à 6, **caractérisé en ce que** l'élément ressort (8) est réalisé sous forme de ressort de compression hélicoïdal.

8. Pince de synchronisation (5) pour un dispositif de synchronisation (1) prévu pour une boîte de changement de vitesses, qui présente un manchon de changement de vitesse (3), **caractérisé par**
- deux rails (6, 7) susceptibles d'être guidés transversalement à une direction de changement de vitesse (S) du manchon de changement de vitesse (3), de manière mobile sur celui-ci, entre lesquels est prévu un élément ressort (8) qui précontraint les rails (6, 7) dans une position neutre à l'état monté,
- à l'état monté, les rails (6, 7) pouvant être en appui sur une butée (9) agencée entre les rails (6, 7) et sur le manchon de changement de vitesse (3).

9. Pince de synchronisation selon la revendication 8, **caractérisé par** au moins une des caractéristiques de la pince de synchronisation des revendications 2, 3, 5, 6 et/ou 7.
